Europäisches Patentamt

European Patent Office

Office européen des brevets

(19)

(11) Veröffentlichungsnummer: **0 329 071 B1**

(12) # EUROPÄISCHE PATENTSCHRIFT

(45) Veröffentlichungstag der Patentschrift: **09.12.92**

(51) Int. Cl.⁵: **B60T 8/66**

(21) Anmeldenummer: **89102497.8**

(22) Anmeldetag: **14.02.89**

(54) Verfahren zum Regeln des Bremsdruckes in einer blockiergeschützten Fahrzeugbremsanlage.

(30) Priorität: **19.02.88 DE 3805270**

(43) Veröffentlichungstag der Anmeldung:
**23.08.89 Patentblatt 89/34**

(45) Bekanntmachung des Hinweises auf die
Patenterteilung:
**09.12.92 Patentblatt 92/50**

(84) Benannte Vertragsstaaten:
**DE ES FR GB IT**

(56) Entgegenhaltungen:
**EP-A- 0 180 721**
**GB-A- 2 151 732**

(73) Patentinhaber: **LUCAS INDUSTRIES public limited company
Great King Street
Birmingham, B19 2XF West Midlands(GB)**

(72) Erfinder: **Braschel, Volker
Fliedergarten 57
W-5450 Neuwied 1(DE)**
Erfinder: **Pickenhahn, Josef
Friedrich-Ebert-Strasse 42
W-5472 Plaidt(DE)**

(74) Vertreter: **von Hellfeld, Axel, Dr. Dipl.-Phys. et al
Wuesthoff & Wuesthoff Patent- und Rechtsanwälte Schweigerstrasse 2
W-8000 München 90(DE)**

EP 0 329 071 B1

## Beschreibung

Die Erfindung betrifft ein Verfahren zum Regeln des Bremdruckes in einer blockiergeschützten Fahrzeug-Bremsanlage, bei dem das Drehverhalten eines gebremsten Rades gemessen und in Abhängigkeit von seinem Schlupf und/oder seiner Verzögerung bei Überschreiten eines Schwellenwertes der Bremsdruck gesenkt und später wieder erhöht wird und bei dem zur Vermeidung von unerwünschten, insbesondere durch Achsschwingungen oder dergleichen bedingten Schwellenwertüberschreitungen der Schwellenwert gegenüber einem Grund-Schwellenwert ($S_G$) heraufgesetzt und danach zeitabhängig abgesenkt wird.

Bei blockiergeschützten Fahrzeug-Bremsanlagen wird die Drehung der einzelnen Räder des Fahrzeuges ständig verfolgt und es werden insbesondere der Schlupf der gebremsten Räder sowie ihre Verzögerung ermittelt, um eine Blockierneigung des Rades festzustellen und das Blockieren zu verhindern. Sobald der Radschlupf bzw. die Verzögerung eine Blockierneigung anzeigen, was dadurch festgestellt wird, daß bestimmte, vorgegebene Schwellenwerte bezüglich Schlupf und/oder Verzögerung überschritten werden, wird ein weiterer Anstieg des Druckes in der Bremse des betroffenen Rades beendet oder der Bremsdruck abgebaut.

Sobald das betroffene Rad aufgrund seiner Reibung mit der Fahrbahn wieder eine hinreichende Drehbeschleunigung erfahren hat, wird der Druck in der Bremse wieder erhöht, um mit dem Rad weitere Bremswirkung zu erzielen.

Bei der blockiergeschützten Regelung des Bremsdruckes geht es wesentlich darum, über alle Regelzyklen einer Bremsung die gebremsten Räder möglichst im günstigsten Bereich der bekannten Reibbeiwert/ Schlupf-Kurve laufen zu lassen.

Um eine Bremsung mit möglichst kurzem Bremsweg bei gleichzeitiger Lenkbarkeit des Fahrzeuges zu erreichen, sollte die Antiblockieranlage möglichst empfindlich und verzögerungsfrei auf eine Blockierneigung anzeigende Änderungen im Drehverhalten des gebremsten Rades reagieren. Hierzu wäre es erstrebenswert, die genannten Schwellenwerte möglichst empfindlich einzustellen, d.h. so, daß schon bei relativ geringen Änderungen des Rad-Drehverhaltens in Richtung auf eine Blockierneigung ein Regelzyklus mit einem Abbau des Bremsdruckes eingeleitet wird.

Einer empfindlichen Einstellung der Schwellenwerte steht aber entgegen, daß unter bestimmten, nicht unwahrscheinlichen Bedingungen gebremste Räder ein Drehverhalten zeigen können, das eine starke Drehverzögerung anzeigt, obwohl das Rad noch in einem gut bremsfähigem Zustand läuft. Diese Erscheinung ist gut bekannt und zum Beispiel in der DE-OS 33 45 729 eingehend beschrieben. Durch insbesondere Achsschwingungen können relativ große Differenzen zwischen der Fahrzeug- und der Radgeschwindigkeit auftreten, die einen instabilen Lauf des Rades vortäuschen und deshalb unerwünschte Regelvorgänge, d.h. einen unerwünschten Abbau des Bremsdruckes, auslösen können. Auch wenn das gebremste Rad in ein Schlagloch oder auf unregelmäßiger Fahrbahn fährt, kann zunächst eine ruckartige Drehbeschleunigung, gefolgt von einer starken Verzögerung, auftreten.

Derartige Achsschwingungen oder dergleichen können also dazu führen, daß eng eingestellte Schwellenwerte bezüglich der Drehverzögerung des Rades überschritten werden und ein unerwünschter Regelvorgang (Druckabbau am gebremsten Rad) eingeleitet wird, obwohl das Rad nicht blockiergefährdet ist.

In der gattungsbildenden DE-OS 33 45 729 wird zur Unterdrückung unerwünschter Regelvorgänge der für die Einleitung der Regelung maßgebliche Schwellenwert in Abhängigkeit von der Hochlaufbeschleunigung des geregelten Rades variiert. Hierzu wird die Hochlaufbeschleunigung des gebremsten Rades (also das Wiederanlaufen des Rades nach einer Verzögerung) ständig überwacht und dann, wenn die Hochlaufbeschleunigung einen vorgegebenen Grenzwert überschreitet, wird der für die Einleitung eines Regelvorganges, d.h. einen Druckabbau in der Bremse des Rades, maßgebliche Schwellenwert variiert. Die Variation des Schwellenwertes erfolgt in Abhängigkeit vom Maß der Hochlaufbeschleunigung. Der Schwellenwert wird also momentan auf den sich aus der Hochlaufbeschleunigung ergebenden Wert erhöht und klingt dann in einer vorgegebenen Zeitfunktion (exponentiell oder linear) auf den Grundwert wieder ab. Der Grund-Schwellenwert ist derjenige Schwellenwert, den das System normalerweise einnimmt, d.h. dann, wenn die Hochlaufbeschleunigung des Rades unter dem obengenannten Grenzwert liegt oder keine Regelung durchgeführt wird.

Neben einer möglichst engen Einstellung der Schwellenwerte, d.h. einer möglichst empfindlichen, frühzeitig einsetzenden Regelung des Bremsdruckes, kommt es bei einem Antiblockiersystem auch darauf an, die sogenannte Bremshysterese weitgehend zu unterdrücken. Die Erscheinung der Bremshysterese ist z.B. in der Zeitschrift ATZ (Automobiltechnische Zeitschrift) 74, 1972, Nr. 7, S. 277 bis 282 (Aufsatz von Fritzsche und Reinecke) sowie in der DE-PS 24 60 904 beschrieben. Unter der Bremshysterese versteht man die Eigenschaft des Bremssystems, daß das momentan wirkende Bremsmoment nicht unmittelbar eine eindeutige Funktion des momentan herrschenden Bremsdruckes ist, sondern mit einer gewissen zeitlichen Verzögerung dem Bremsdruck folgt. Bei einem Wechsel von Druckanstieg auf Druckabfall und umgekehrt wird also zunächst aufgrund der Hysterese zunächst ein Bereich durchlaufen, in dem trotz einer Druckänderung das Bremsmoment zunächst fast konstant bleibt. Daraus resultiert eine störende Totzeit für die Regelung.

Auch bewirken steile Druckabfall- und Druckanstiegsgradienten ein sogenanntes "Überschießen" des Druckes über die idealen Grenzwerte aufgrund der allgemeinen Trägheit des Systems. In der DE-PS 24 60 904 werden zur Verminderung der schädlichen Wirkung der Hysterese und zum optimalen Anpassen des Verlaufs der Radumfangsgeschwindigkeit an den günstigen Bereich der Reibbeiwert/Schlupf-Kurve der Druckanstieg sowie der Druckabfall mit unterschiedlichen Gradienten gesteuert. Am Anfang eines Druckanstiegs bzw. Druckabfalls wird mit relativ großem Gradienten eine schnelle Änderung des Druckes bewirkt, während bei Annäherung an den zu erreichenden Grenzwert die Druckänderung mit kleinerem Gradienten durchgeführt wird. Die Zeitdauer der Druckänderung mit großem Gradienten ist dabei abhängig von der zuvor ermittelten Dauer der Druckanhebung im vorangegangenen Regelzyklus.

Der Erfindung liegt die Aufgabe zugrunde, das eingangs genannte Verfahren zum Regeln des Bremsdruckes in einer blockiergeschützten Fahrzeug-Bremsanlage so auszugestalten, daß mit einfachen Mitteln unerwünschte, insbesondere durch Achsschwingungen oder dergleichen bedingte Schwellenwertüberschreitungen ausgeschlossen sind und trotzdem der zeitliche Verlauf des Bremsdruckes einen möglichst kurzen Bremsweg auch bei unregelmäßigen Straßenverhältnissen ermöglicht.

Die erfindungsgemäße Lösung dieser Aufgabe ist im Patentanspruch 1 beschrieben.

In einer bevorzugten Ausgestaltung der Erfindung ist vorgesehen, daß die Absenkung des Schwellenwertes in Abhängigkeit von der Zeit, also die Verminderung des Schwellenwertes von dem um den konstanten Betrag erhöhten Wert in Richtung auf den Grundschwellwert zurück, mit einem Gradienten durchgeführt wird, der von derjenigen Zeitspanne abhängt, die für den Druckabbau in einem oder mehreren der vorangegangenen Regelzyklen, vorzugsweise im unmittelbar vorausgegangenen Regelzyklus, abhängt. Während bei der Lehre gemäß der DE 33 45 729 noch eine zeitlich abklingende Funktion für den Schwellenwert vorgegeben wird (z.B. exponentiell oder linear), wird nach der erfindungsgemäßen Ausgestaltung die Absenkung des Schwellenwertes davon abhängig gemacht, wie lange es in dem vorausgegangenen Regelzyklus gedauert hat, bis das blockiergefährdete Rad wieder eine bestimmte Drehbeschleunigung erfahren hat, mit anderen Worten, wie lange die Zeitspanne des Druckabbaus im vorangegangenen Regelzyklus gedauert hat. Diese Druckabbauzeit entspricht derjenigen Zeitspanne, in der das Druckablaßventil offen ist.

Es ist auch möglich, die für das Abklingen des zunächst hochgesetzten Schwellenwertes vorgesehene Zeitspanne von dem Rad-Drehverhalten während der vorangegangenen Regelungen abhängig zu machen. Es wird hierfür die Regelfrequenz, d.h. die Anzahl der Regelzyklen pro Zeiteinheit, ermittelt und in einem Prozessor abgespeichert. Aus der ermittelten Regelfrequenz wird errechnet, wann bei homogener, also gleichbleibender Fahrbahn das nächste Druck-Abbausignal zu erwarten ist. Zu diesem Zeitpunkt sollte der Schwellenwert wieder den Grund-Schwellenwert angenommen haben.

In einer weiteren bevorzugten Ausgestaltung des erfindungsgemäßen Verfahrens ist vorgesehen, das Abklingen des Schwellenwertes vom hochgesetzten, unempfindlicheren Wert auf den normalen Grund-Wert zu modifizieren. Es versteht sich, daß auch während des Abklingens des Schwellenwertes vom heraufgesetzten Wert auf den Grund-Schwellenwert das Rad-Drehverhalten laufend weiter überwacht wird. Erreicht dabei das Rad während einer solchen Abklingphase den normalen Grund-Schwellenwert, was jedoch in diesem Falle nicht zu einem Ansprechen der Druckregelung (Druckabbau) führt, weil der momentan eingestellte Schwellenwert ja noch höher liegt als der Grund-Schwellenwert, so wird in dieser Ausgestaltung der Erfindung eine erneute Hochsetzung des Schwellenwertes eingeleitet ("angetriggert"). Nach einem derartigen erneuten Antriggern des erhöhten Schwellenwertes kann der anschließende Abklinggradient, also die Steilheit, mit welcher der hochgesetzte Schwellenwert auf den Grund-Schwellenwert abgesenkt wird, steiler eingestellt werden als beim erstmaligen Abklingen vom erhöhten Schwellenwert während dieses Regelzyklus'.

Die Erfindung setzt voraus, daß in herkömmlicher Weise nach einem Schließen des Druckablaßventils ein Druckaufbau erfolgt. Der Druckaufbau erfolgt mit einem vorgegebenen Gradienten, wobei der Gradient durch eine Drossel, einen Mengenregler oder durch ein gepulstes Takten des Druckeinlaß-Ventils in bekannter Weise gesteuert wird.

Im einzelnen erfolgt die Absenkung des Schwellenwertes mit von der Zeitspanne des Druckabbaus im vorangegangenen Regelzyklus abhängigem Gradienten derart, daß bei kurzer Druckabbau-Zeitspanne ein steiler Gradient und bei langer Druckabbau-Zeitspanne ein relativ flacher Gradient gewählt werden. Bevorzugt wird die Zeit für das Abklingen des Schwellenwertes auf einen vorgegebenen Wert begrenzt, z.B. auf 200 Millisekunden, um bei außergewöhnlich langen Druckabbauzeiten im vorangegangenen Regelzyklus eine zu unempfindliche Regelung im momentanen Regelzyklus zu vermeiden.

In einer weiteren bevorzugten Ausgestaltung des erfindungsgemäßen Verfahrens ist vorgesehen, daß die Absenkung des Schwellenwertes zunächst bis auf Werte erfolgt, die unter dem Grund-Schwellenwert liegen, d.h. der Schwellenwert wird für eine gewisse Zeitspanne unter den Normalwert gesetzt, die Regelung wird also empfindlicher als es dem vor Beginn eines ersten Regelzyklus eingestellten Schwellenwert entspräche. Die vorgegebene Zeitspanne, in welcher der Schwellenwert unter den Grund-Schwellenwert abgesenkt ist, wird vorzugsweise in Abhängigkeit von der Dauer des Druckabbaus bzw. des Rad-Drehverhaltens in dem unmittelbar vorangegangenen Regelzyklus gewählt und zwar so, daß bei homogener, sich also nicht wesentlich verändernder Fahrbahn voraussichtlich innerhalb dieser Zeitspanne ein Ansprechen der Regelung erfolgt, d.h. das Druckablaßventil, mit dem der Bremsdruck vermindert wird, zumindest kurzzeitig geöffnet wird.

In einer Variante der Erfindung wird der Gradient, mit dem der Schwellenwert vom erhöhten Wert in Richtung auf den Grund-Schwellenwert und den darunter liegenden, geringeren Schwellenwert abgesenkt wird, zusätzlich auch von der ermittelten Fahrzeugverzögerung eingestellt.

Der Begriff "Gradient" im Sinne der vorstehenden Erläuterungen ist nicht auf eine lineare Funktion beschränkt, sondern erfaßt auch andere, gegebenenfalls nicht monotone Funktionsverläufe und beinhaltet somit nur eine Aussage darüber, wie schnell insgesamt der Schwellenwertabbau erfolgt, wobei dieser Abbau unterschiedlich zeitlich abklingenden Funktionen folgen kann. Bevorzugt wird eine lineare Funktion verwendet.

Nachfolgend werden Ausführungsbeispiele der Erfindung anhand der Zeichnung näher erläutert. Es zeigt bzw. zeigen:

Fig. 1 für ein erstes Ausführungsbeispiel einer erfindungsgemäßen Regelung des Bremsdruckes den zeitlichen Verlauf der Radumfangsgeschwindigkeit, des Bremsdruckes und des zugehörigen Schwellenwertes;

Fig. 2 und 3 eine Darstellung entsprechend Fig. 1 für weitere Ausführungsbeispiele eines erfindungsgemäßen Regelverfahrens;

Fig. 4 den Verlauf des Schwellenwertes gemäß einem anderen Ausführungsbeispiel des erfindungsgemäßen Regelverfahrens; und

Fig. 5 ein Blockschaltbild einer Vorrichtung zur Durchführung eines erfindungsgemäßen Regelverfahrens.

In den Figuren ist jeweils ein einziger Regelzyklus im Verlaufe einer typischerweise mehrere solche Zyklen aufweisenden blokkiergeschützten Bremsung dargestellt. Über identischen Zeit-Abszissen sind in den Fig. a, b und c jeweils die Radumfangsgeschwindigkeit bzw. der Bremsdruck bzw. der Schwellenwert aufgetragen.

Die schaltungstechnischen Mittel, mit denen die Druckventile eines ABS-Anlage (Antiblockieranlage) in einer gewünschten zeitlichen Folge steuerbar sind, sind heute dem Fachmann wohlbekannt (siehe z.B. die eingangs genannten Druckschriften sowie die DE 22 51 785, DE 23 07 368).

Auch die Mittel, mit denen das Drehverhalten des gebremsten Rades gemessen und der Vergleich mit vorgegebenen Schwellenwerten bezüglich des Schlupfes und/oder der Rad-Verzögerung durchgeführt wird, sind dem Fachmann heute wohlbekannt, so daß sich hier die nachfolgende Beschreibung auf die eigentliche Erfindung konzentrieren kann.

Die Erfindung läßt sich auch bei einer sogenannten Anti-Schlupf-Regelung (ASR) einsetzen. AS-Regelungen werden auch im Stand der Technik bereits mit den vorstehend beschriebenen ABS-Anlagen durchgeführt. Mit einer AS-Regelung wird verhindert, daß beim Anfahren eines Fahrzeuges ein Rad durchdreht, insbesondere auf glatter Fahrbahn. Mit einer AS-Regelung ist also gewährleistet, daß beim Beschleunigen eines Fahrzeuges immer ein maximales Drehmoment von den Reifen auf die Fahrbahn übertragen wird. Üblicherweise weisen Antriebsräder eines Kraftwagens ein sogenanntes Ausgleichsgetriebe (Differential) auf. Der Antrieb der Räder erfolgt nicht auf einer durchgehenden Achse, sondern über das Ausgleichsgetriebe, welches eine geteilte Achse mit jeweils gleichem Drehmoment, aber verschiedenen Drehzahlen antreibt. Dreht deshalb ein Rad der Achse durch, so wird auch das andere nicht durchdrehende) Rad des Fahrzeuges mit einem entsprechend geringen Drehmoment angetrieben, so daß die Räder insgesamt nicht ein maximales Drehmoment auf die Fahrbahn übertragen. Gemäß bekannten AS-Regelungen wird deshalb mit einer ebenfalls bekannten ABS-Regelanlage auch das Drehverhalten der Räder hinsichtlich eines möglichen Durchdrehens überwacht. Hierzu wird ermittelt, ob die Drehbeschleunigung eines Rades größer ist als ein vorgegebener Schwellenwert, der abhängig ist von der mit dem Fahrzeug bei optimaler Fahrbahn erzielbaren Beschleunigung. Sobald vorgegebene Schwellenwerte bezüglich der Drehbeschleunigung des Rades überschritten werden, wird das betroffene Rad zwangsweise und automatisch (also ohne daß der Fahrer das Bremspedal betätigen muß) gebremst, so daß über das Ausgleichsgetriebe am zuvor durchdrehenden Rad und auch am nicht durchdrehenden Rad der Achse ein erhöhtes Drehmoment erzeugt werden kann. Eine solche AS-Regelung erfolgt ebenfalls mit einer Vielzahl von zeitlich schnell aufeinanderfolgenden Regelzyklen, was dem Fachmann als solches bekannt ist.

Die erfindungsgemäßen Verfahren lassen sich nun auch bei AS-Regelungen einsetzen. Auch bei ASR kann es nämlich zu unerwünschten, insbesondere durch Achsschwingungen oder dergleichen bedingten Schwellenwertüberschreitungen kommen, die unerwünscht zur Folge haben, daß an dem betroffenen Rad zu früh ein automatischer Bremsdruckaufbau erfolgt.

Somit lehrt die Erfindung auch ein Verfahren zum Regeln des Bremsdruckes in einer antischlupf-geregelten Fahrzeug-Bremsanlage, bei dem das Drehverhalten eines angetriebenen Rades gemessen und in Abhängigkeit von seiner Beschleunigung bei Überschreiten eines Schwellenwertes ein Bremsdruck erzeugt und später wieder abgesenkt wird, welches dadurch gekennzeichnet ist, daß zu einem Zeitpunkt ($t_2$), der vom Zeitpunkt ($t_1$, $t_2$) des Beginns einer Druckabsenkung oder -erhöhung abhängt, der Schwellenwert zumindest während eines Teils der Zeitspanne ($t_2$-$t_1'$), in welcher der Bremsdruck in einem Regelzyklus erhöht wird, um einen vorgegebenen, konstanten Betrag ($S_H$ - $S_G$) gegenüber dem Grundschwellenwert ($S_G$) heraufgesetzt wird. Statt der vorstehend beschriebenen AS-Regelung mit Heraufsetzung des Schwellenwertes um einen vorgegebenen, konstanten Betrag gegenüber dem Grundschwellenwert kann auch die Veränderung des Schwellenwertes bei einer AS-Regelung um einen von einer Druckaufbauzeitspanne in zumindest einem vorangegangenen Regelzyklus abhängigen Betrag gegenüber dem Grundschwellenwert erfolgen.

Auch die Ausgestaltungen der Patentansprüche 4 bis 10 lassen sich in analoger Weise von einer ABS-Regelung auf eine AS-Regelung übertragen.

Nachfolgend wird ein Ausführungsbeispiel anhand der Zeichnung näher erläutert.

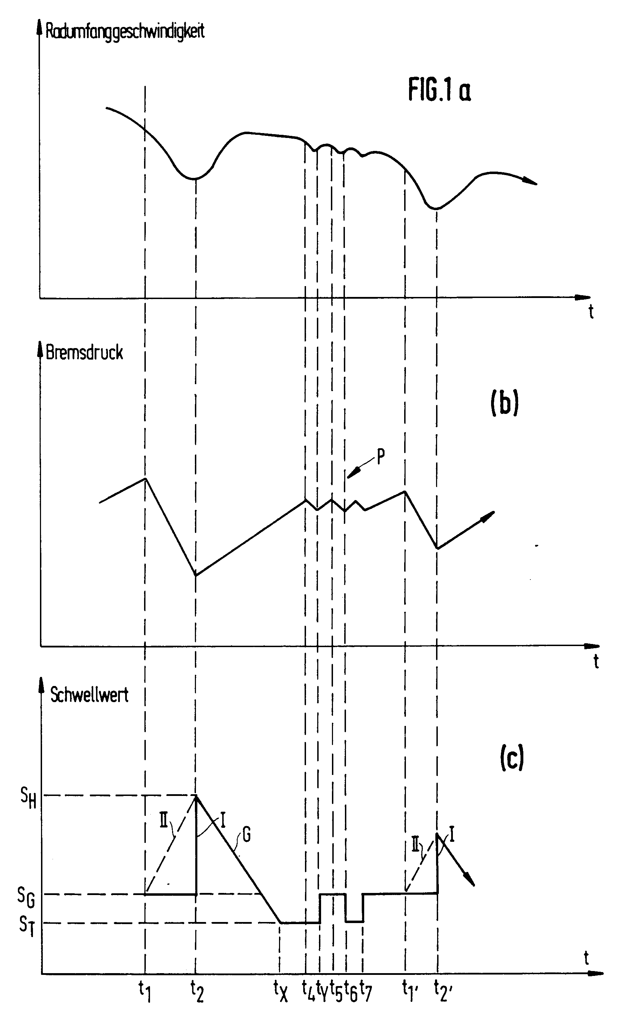

Die Fig. 1a und 1b zeigen zeitlich koordinierte Verläufe der Radumfangsgeschwindigkeit bzw. des Bremsdruckes für einen Regelzyklus. Die theoretischen Grundlagen für das Zustandekommen und das Verständnis dieser Kurven sind dem Fachmann geläufig (siehe z.B. BOSCH, Technische Berichte, Bd. 7, 1980, Heft 2, S. 65 bis 94). Die Erfindung betrifft die Steuerung des Schwellenwertes bezüglich der Rad-Drehverzögerung, welcher in den Fig. 1c, 2c, 3c dargestellt ist. Sobald die Drehverzögerung des gebremsten Rades den Schwellenwert überschreitet, was eine Blokkierneigung des Rades anzeigt, wird das Druckablaßventil für die zugehörige Bremse geöffnet und der Bremsdruck abgebaut, so daß das Rad wieder aus dem Bereich eines kritischen, hohen Schlupfes in einen stabilen Bereich überführt wird, in dem es gut lenkfähig ist und eine hohe Bremswirkung entfaltet.

Gemäß den Fig. 1c, 2c, 3c ist der Schwellenwert bezüglich der Rad- Drehverzögerung nicht konstant sondern eine Funktion der Zeit und wird abhängig davon, ob während des Regelzyklus der Bremsdruck (Fig. 1b, 2b, 3b) abfällt oder ansteigt, erhöht bzw. gesenkt.

In einem einfachen, nicht erfindungsgemäß ausgestalteten System wäre der Schwellenwert zeitlich konstant. Dabei würden aber bei einer empfindlichen Einstellung des Schwellenwertes bei Auftreten der oben erläuterten Achsschwingungen oder dergleichen unerwünschte Drehverzögerungswerte auftreten, die den Schwellenwert überschreiten können und somit eine unnötige und deshalb unerwünschte Absenkung des Bremsdruckes am geregelten Rad herbeiführen würden.

Zur Vermeidung solcher unerwünschten Schwellenwertüberschreitungen wird der Schwellenwert gemäß den Fig. 1c, 2c, 3c in Abhängigkeit vom Bremsdruck variiert.

Vor und zu Beginn eines Regelzyklus herrscht der Grund-Schwellenwert $S_G$, welcher auch als "Normal-Schwellenwert" bezeichnet werden kann.

Zum Zeitpunkt $t_1$ überschreitet die Drehverzögerung des gebremsten Rades den Grund-Schwellenwert $S_G$, was eine Blockierneigung dieses Rades anzeigt. Zur Vermeidung des Blockierens wird dann gemäß Fig. 1b der Bremsdruck abgesenkt. Sobald das derart vom Bremsdruck entlastete Rad wieder "Tritt gefaßt hat" (siehe Fig. 1a), erfolgt in herkommlicher Weise wieder ein Anstieg des Bremsdruckes (siehe Fig. 1b; Zeitspanne $t_2$ bis $t_4$).

Gemäß Fig. 1c erfolgt in einer ersten Variante der Erfindung zum Zeitpunkt $t_2$, d.h. zum Zeitpunkt des Beginns des Bremsdruckanstieges (Fig. 1b) eine sprunghafte Erhöhung des Schwellenwertes um einen konstanten Betrag vom Grund-Schwellenwert $S_G$ auf den erhöhten Schwellenwert $S_H$. Dieser Schwellenwertverlauf ist in Fig. 1c mit durchgezogener Linie dargestellt. Somit kann der Bremsdruckanstieg gemäß Fig. 1b nicht durch z.B. Achsschwingungen, Schlaglöcher oder dergleichen bedingte Rad-Drehverzögerungswerte unterbrochen werden. Gerade die Zeitspanne ab dem Beginn $t_2$ eines erneuten Druckaufbaus ist besonders anfällig für das Auftreten derartiger Fehlsignale, weshalb für diesen Zeitraum ein erhöhter Schwellenwert vorgesehen ist, der solche "vorgetäuschten" Drehverzögerungen unwirksam macht. Nach dem plötzlichen Anstieg des Schwellenwertes auf den erhöhten Wert $S_H$ zum Zeitpunkt $t_2$ wird der Schwellenwert in der Zeitspanne $t_2$ bis $t_x$ kontinuierlich abgesenkt. Die Absenkung erfolgt mit einem Gradienten G, der bestimmt ist durch die Zeitspanne des Druckabbaus ($t_1$ bis $t_2$) im vorangegangenen Regelzyklus oder auch im gerade laufenden Regelzyklus. Je kürzer die Zeitspanne des Druckabbaus ist, umso steiler ist der Gradient G.

Gemäß Fig. 1c wird der Schwellenwert in der Zeitspanne $t_2$ bis $t_x$ nicht nur auf den Grund-Schwellenwert $S_G$ gesenkt, sondern darüberhinaus noch tiefer auf einen Wert $S_T$ erniedrigt. Das System weist also beim Schwellenwert $S_T$ eine erhöhte Regelempfindlichkeit auf, d.h. der Abbau des Bremsdruckes erfolgt schon bei geringeren Drehverzögerungen als dem Grund-Schwellenwert $S_G$.

Die Zeitspanne $t_x$ bis $t_y$, in welcher der Schwellenwert $S_T$ wirksam ist, wird für eine vorbestimmte Zeit, z.B. 16 ms, beibehalten. Danach, also zum Zeitpunkt $t_y$, wird der Schwellenwert wieder auf den "normalen" Grund-Schwellenwert $S_G$ erhöht, wenn in diesem Zeitintervall (von z.B. 16 ms) keine Schwellenwertüberschreitung erfolgt ist. Falls innerhalb der auf z.B. 16 ms eingestellten Zeitspanne $t_x$-$t_y$ ein Ansprechen der Regelung (d.h. eine Schwellenwertüberschreitung) erfolgt, hier zur Zeit $t_4$, wird der erniedrigte Schwellenwert $S_T$ noch für eine weitere vorgegebene Zeitspanne, die ebenfalls in der Größenordnung von 5 bis 20 ms liegen kann, beibehalten und dann erst auf den Grund-Schwellenwert $S_G$ erhöht. Die Zeitspanne extrem empfindlichen Schwellenwertes $S_T$ ist so gewählt, daß bei homogener, also sich nicht wesentlich verändernder Fahrbahn mit hoher Wahrscheinlichkeit die Rad-Drehverzögerung den tiefen Schwellenwert $S_T$ überschreitet und somit das den Bremsdruck entlastende Magnetventil geöffnet und der Bremsdruck gemäß Fig. 1b (Zeitspanne $t_6$ bis $t_7$) kurzzeitig erniedrigt wird, worauf nach kurzer Zeit der Drehbeschleunigungs-Schwellenwert wieder überschritten wird und ein erneuter Druckaufbau folgt. Auf diese Weise wird ein sogenanntes "Druck-Pulsen" erzeugt, welches in Fig. 1b im Bereich P dargestellt ist.

Nachdem der Schwellenwert zum Zeitpunkt $t_y$ wieder auf den Grund-Schwellenwert $S_G$ gestellt ist, erreicht der Bremsdruck bei $t_1'$ wieder einen Maximalwert, bei dem die Rad-Drehverzögerung wieder so groß wird, daß erneut Blockiergefahr besteht. Es beginnt ein neuer Regelzyklus entsprechend dem eben beschriebenen.

In einer Abwandlung der vorstehend beschriebenen Ausführungsform wird der Schwellenwert nicht zu Beginn des Zeitpunktes $t_2$ des Druckaufbaus plötzlich gemäß Kurve I vom Grund-Schwellenwert $S_G$ auf den erhöhten Schwellenwert $S_H$ gesteigert, sondern schon zuvor gemäß Kurve II gestrichelt zum Zeitpunkt $t_1$, dem Beginn des

Druckabbaus, kontinuierlich auf den erhöhten Wert $S_H$ angehoben.

Ansonsten entspricht der Schwellenwertverlauf dem eben beschriebenen gemäß Fig. 1c.

In Fig. 1c ist die Ordinate mit "Schwellenwert" bezeichnet. Aus der obigen Beschreibung ergibt sich, daß diese Ordinate ebensogut mit "Filterwirkung" bezeichnet werden könnte. Gemäß dem Kurvenverlauf werden nämlich die durch Achsschwingungen, Schlaglöcher etc. ausgelösten, eine Fehl-Regelung bewirkenden Rad-Drehverzögerungen mit mehr oder weniger großer Empfindlichkeit ausgefiltert (unwirksam gemacht). Diese Filterwirkung (Unwirksammachung der Fehlersignale) ist dann besonders groß, wenn der Schwellenwert größer ist als der Grund-Schwellenwert $S_G$, bzw. besonders gering, wenn der Schwellenwert kleiner ist als $S_G$.

Das Absenken des Schwellenwertes vom erhöhten Schwellenwert $S_H$ bis zum tiefen Schwellenwert $S_T$ im Zeitintervall $t_2$ bis $t_x$ (Fig. 1c, Gerade G) kann bezüglich des Gradienten nicht nur, wie oben beschrieben, in Abhängigkeit von der Druckabbau-Zeitspanne ($t_1$-$t_2$) im vorausgegangenen Regelzyklus gewählt werden, sondern auch zusätzlich von der ermittelten Fahrzeugverzögerung. Der tiefe Schwellenwert $S_T$ wird dann auf homogener Fahrbahn sehr schnell überschritten, wodurch das "Pulsen" des Bremsdruckes gemäß Bereich P in Fig. 1b eingeleitet wird, so daß sich der Bremsdruck allmählicher an den Maximaldruck annähert und das unerwünschte "Überschießen" des Maximalwertes verhindert wird.

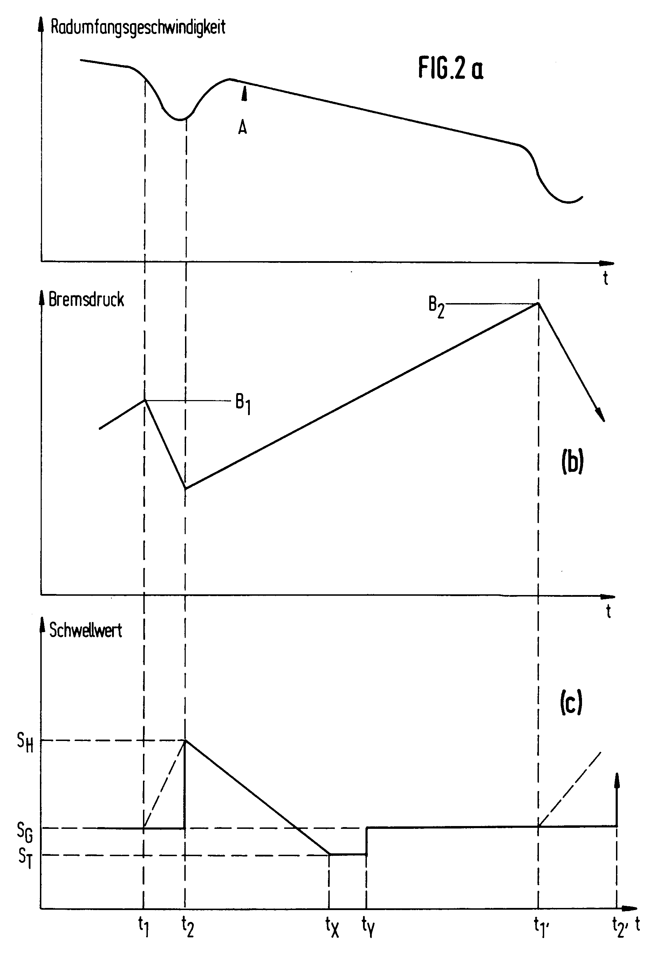

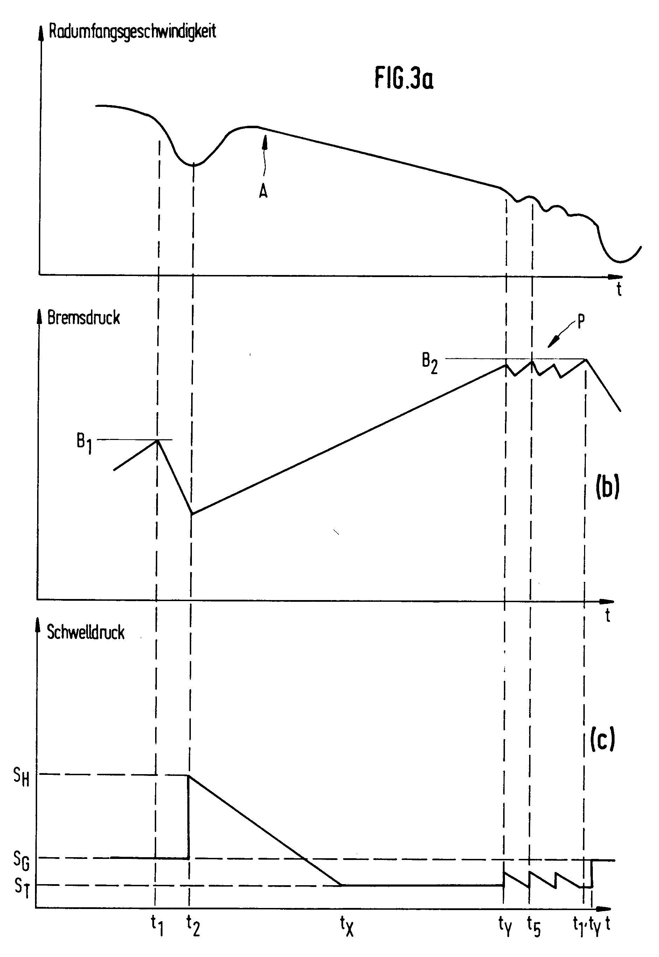

In den Fig. 2 und 3 wird ein erfindungsgemäßes Regelverhalten für den Fall beschrieben, daß auf der Fahrbahn ein plötzlicher Wechsel des Reibbeiwertes erfolgt, also beispielsweise ein schneller Wechsel zwischen feuchter (glitschiger) und trockener Fahrbahn. Dieser Wechsel von feuchter Fahrbahn mit schlechtem Reibbeiwert auf trockene Fahrbahn mit gutem Reibbeiwert erfolge beispielsweise an der mit dem Pfeil A markierten Stelle. Aufgrund der Änderung des Reibbeiwertes der Fahrbahn erfährt das Rad während der gesamten Druckaufbauphase im Zeitintervall $t_2$ bis $t_1'$ keine Rad-Drehverzögerung, die über den Schwellenwert hinausgeht, so daß der Druckanstieg gemäß Fig. 2b nicht unterbrochen wird. Der Bremsdruck wird schnell und unverzögert auf den maximal möglichen Wert gebracht, so daß keine Bremswirkung verschenkt wird. Dabei ist die Zeitspanne $t_x$ bis $t_y$, in welcher der tiefe Schwellenwert $S_T$ wirksam ist, relativ kurz gewählt.

Wird die Zeitspanne $t_x$ bis $t_y$ gemäß Fig. 3c relativ lang gewählt, so wird zu relativ späten Zeitpunkten (Fig. 3c, $t_5$ etc.) die Rad-Drehverzögerung den empfindlicheren Schwellenwert überschreiten, so daß am Ende der Druckerhöhungsphase das erwähnte "Pulsen" des Bremsdruckes erfolgt, wodurch eine erwünschte, allmähliche Annäherung an den Maximalwert des Bremsdruckes erfolgt. Aufgrund des vorausgesetzten Reibwert-Sprunges bei A treten gemäß Fig. 2b und 3b zwei unterschiedliche Blockierdrucke auf. Bei geringem Reibbeiwert der Fahrbahn gilt der tiefere Blockierdruck $B_1$ und bei Fahrbahn mit hohem Reibbeiwert gilt der höhere Blockierdruck $B_2$.

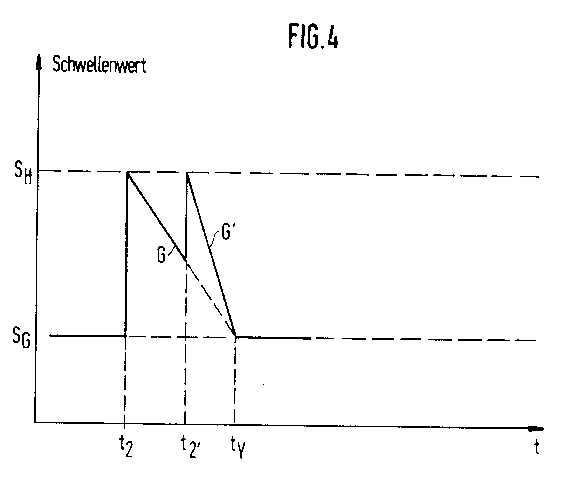

Fig. 4 zeigt eine Variante bezüglich der Steuerung des Schwellenwertes. Wie bei den bisher beschriebenen Ausführungsbeispielen wird zum Zeitpunkt $t_2$ der Schwellenwert auf den erhöhten Wert $S_H$ angehoben. Sodann klingt der Schwellenwert mit dem Gradienten G ab. Während des Abklingens des Schwellenwertes wird das Rad-Drehverhalten laufend überwacht. Es sei angenommen, daß während der Abklingphase zum Zeitpunkt $t_2'$ der normale Grund-Schwellenwert $S_G$ vom Rad erreicht wird. Hierdurch wird aber aufgrund des hochgesetzten Schwellenwertes kein Druckabbau an der Bremse eingeleitet. Gemäß der in Fig. 4 gezeigten Variante wird aber zum Zeitpunkt $t_2'$ der Schwellenwert erneut auf den erhöhten Wert $S_H$ angehoben. Sodann fällt der Schwellenwert in der Zeitspanne $t_2'$ bis $t_y$ mit dem Gradienten $G'$ auf den normalen Grund-Schwellenwert $S_G$ ab. Es versteht sich, daß in Abwandlung der Fig. 4 der Schwellenwert entsprechend den Ausführungsbeispielen gemäß den Fig. 1 bis 3 auch auf tiefere Werte (entsprechend $S_T$) abgesenkt werden kann. Gemäß Fig. 4 ist der Gradient $G'$ im Anschluß an ein erneutes "Antriggern" des erhöhten Schwellenwertes $S_H$ steiler als bei Fehlen dieses erneuten Antriggerns. Der Gradient $G'$, mit dem der Schwellenwert nach dem erneuten Antriggern abfällt, ist gemäß Fig. 4 so steil gewählt, daß insgesamt die Abklingzeit des Schwellenwertes nicht länger ist als für den Fall, daß während der Abklingphase vom gebremsten Rad der Grund-Schwellenwert $S_G$ nicht erreicht worden wäre.

Als typisches Beispiel für die in den Figuren gezeigten Schwellwert-Verläufe kann für den hochgesetzten Schwellenwert $S_H$ eine Geschwindigkeitsdifferenz von 8 km/h angesetzt werden. Dieser hochgesetzte Schwellenwert kann typischerweise in einer Abklingphase von 50 Millisekunden auf den normalen Grund-Schwellenwert $S_G$ von zum Beispiel 2 km/h abgesenkt werden.

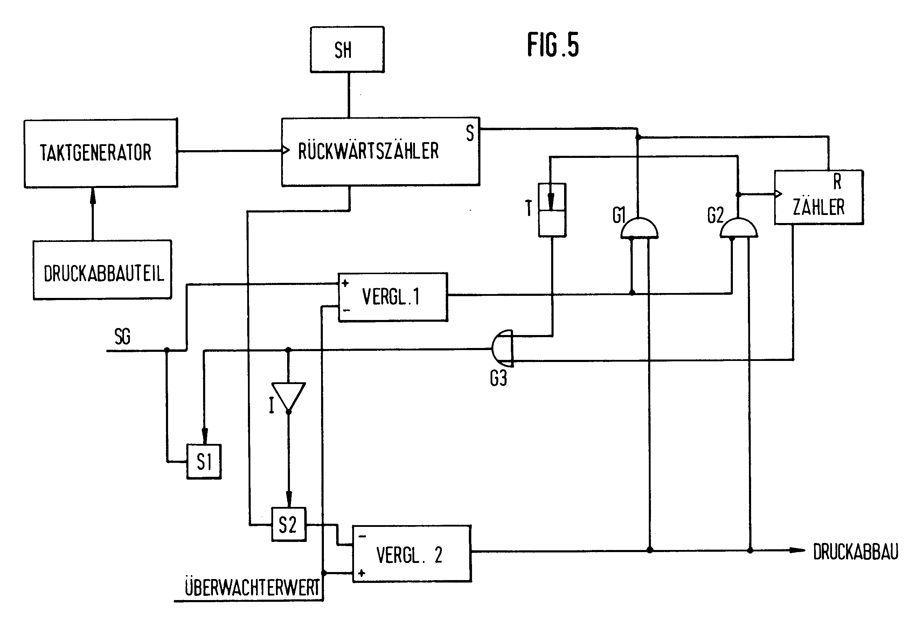

Fig. 5 zeigt ein Blockschaltbild für eine Vorrichtung, mit der dasjenige vorstehend beschriebene Ausführungsbeispiel der erfindungsgemäßen Verfahren durchgeführt werden kann, bei dem der Schwellenwert um einen konstanten Betrag $S_H - S_G$ hochgesetzt wird und der anschließende Gradient G des Druckabbaus in Abhängigkeit von der Druckabbauzeit $t_1$-$t_2$ im vorangegangenen Regelzyklus (siehe Fig. 1) eingestellt wird.

Bei einem Druckabbau wird ein Rückwärtszähler mit einem Wert $S_H$ geladen, der während einer Druckaufbauphase wieder zurückgezählt wird. Die Zählfrequenz, mit welcher ein Taktgenerator den Rückwärtszähler taktet, hängt von der Druckabbauzeit im vorangegangenen Regelzyklus ab. Der Gradient des Schwellwert-Abbaus wird also durch die Druckabbauzeit im vorangegangenen Regelzyklus bestimmt. Ein Druckabbau erfolgt gemäß dem Ausgang des Vergleichers 2. Erfolgt ein Druckabbau zu einem Zeitpunkt, in dem der eingestellte Schwellenwert den Normalwert $S_G$ aufweist, so wird der Rückwärtszähler aufgrund des Ausganges des Gatters $G_1$ neu geladen. Der Schwellenwert wird über die Schalter S1 und S2 umgeschaltet. Der Schwellenwert $S_G$ ist dann eingestellt, wenn der Ausgang des Gatters G3 gleich "1" ist (der Zähler hat eine maximal zulässige Anzahl von Druckreduzierungen während einer empfindlichen Phase des Schwellenwertes abgezählt oder die Zeit für einen Druckabbau während der empfindlichen Phase des Schwellenwertes wurde länger als eine vorgegebene Zeitspanne). Ist der Ausgang des Gatters G3 auf "0", so wird der Schalter S1 gesperrt und der Schalter S2 über einen Inverter I durchgeschaltet, so daß derjenige Schwellenwert maßgeblich ist, der gerade vom Rückwärtszähler erzeugt wird.

Die Zahl der Druckabbauten während der Zeitspanne (Fig. 1: $t_x$-$t_y$), während der ein empfindlicher Schwellenwert $S_T$ eingestellt ist, wird vom Zähler ermittelt. Immer, wenn ein neuer Druckabbau beginnt und der überwachte Schwellenwert den Normalwert $S_G$ aufweist (Ausgang des Vergleichers 1 ist "1"), geht der Ausgang des Gatters G2 von "0" auf "1" und der Zähler zählt einen Schritt weiter. Der Zählerstand wird gelöscht, wenn ein Druckabbau dann erfolgt, wenn der eingestellte Schwellenwert $S_G$ ist (Ausgang des Gatters $G_1$ = 1).

**Patentansprüche**

1. Verfahren zum Regeln des Bremsdruckes in einer blockiergeschützten Fahrzeug-Bremsanlage, bei dem das Drehverhalten eines gebremsten Rades gemessen und in Abhängigkeit von seinem Schlupf und/oder seiner Verzögerung bei Überschreiten eines Schwellenwertes der Bremsdruck gesenkt und später wieder erhöht wird und bei dem zur Vermeidung von unerwünschten, insbesondere durch Achsschwingungen oder dergleichen bedingten Schwellenwertüberschreitungen der Schwellenwert gegenüber einem Grund-Schwellenwert ($S_G$) heraufgesetzt und danach zeitabhängig abgesenkt wird, dadurch **gekennzeichnet,** daß in Abhängigkeit vom Zeitpunkt ($t_1$, $t_2$) des

Beginns einer Druckabsenkung oder -erhöhung in einem Regelzyklus der Schwellenwert um einen Betrag ($S_H$ - $S_G$) gegenüber dem Grund-Schwellenwert ($S_G$) heraufgesetzt wird, wobei der genannte Betrag ($S_H$ - $S_G$) entweder konstant vorgegeben oder von einer zuvor gemessenen Fahrzeugverzögerung abhängig oder von der Druckabbauzeitspanne ($t_2$ - $t_1$) in zumindest einem, vorzugsweise dem unmittelbar vorangegangenen Regelzyklus abhängig ist.

2. Verfahren nach Anspruch 1,
dadurch **gekennzeichnet,**
daß die Absenkung des Schwellenwertes mit einem Gradienten durchgeführt wird, der von der Zeitspanne ($t_2$ - $t_1$) des Druckabbaus in zumindest einem der vorangegangenen Regelzyklen abhängt.

3. Verfahren nach einem der Ansprüche 1 oder 2,
dadurch **gekennzeichnet,**
daß ein Gradient, mit dem die Absenkung des Schwellenwertes durchgeführt wird, von einer ermittelten Fahrzeugverzögerung abhängig gemacht wird.

4. Verfahren nach einem der vorhergehenden Ansprüche,
dadurch **gekennzeichnet,**
daß die Absenkung des Schwellenwertes für eine vorgegebene Zeitspanne ($t_x$ - $t_y$) auf Werte ($S_T$) erfolgt, die geringer sind als der Grund-Schwellenwert ($S_G$).

5. Verfahren nach einem der vorhergehenden Ansprüche,
dadurch **gekennzeichnet,**
daß der Schwellenwert während eines Regelzyklus in Abhängigkeit vom Zeitpunkt ($t_1$) des Beginns einer Druckabsenkung nach einer vorgegebenen Zeitfunktion bis zu einem vom Zeitpunkt ($t_2$) des Beginns des nachfolgenden Druckanstiegs abhängigen Zeitpunkt auf den erhöhten Wert ($S_H$) erhöht wird.

6. Verfahren nach einem der Ansprüche 1 bis 4,
dadurch **gekennzeichnet,**
daß der Schwellenwert zum Zeitpunkt ($t_2$) des Beginns einer Druckerhöhung um den konstanten Betrag ($S_H$ - $S_G$) erhöht wird.

7. Verfahren nach Anspruch 4,
dadurch **gekennzeichnet,**
daß nach einer Absenkung des Schwellenwertes auf einen unter dem Grund-Schwellenwert ($S_G$) liegenden Wert ($S_T$) die Druckabbauphase auch dann für eine vorgegebene Zeitspanne beibehalten wird, wenn der gemessene Schlupf und/oder die Verzögerung den tieferen Schwellenwert ($S_T$) überschritten haben.

8. Verfahren nach Anspruch 1,
dadurch **gekennzeichnet,**
daß der Schwellenwert um einen von der Druckabbauzeitspanne ($t_2$-$t_1$) in dem unmittelbar vorangegangenen Regelzyklus abhängigen Betrag ($S_H$ - $S_G$) gegenüber dem Grund-Schwellenwert ($S_G$) heraufgesetzt wird.

## Claims

1. A method of controlling the brake pressure in an anti-lock vehicle brake system, wherein the rotational behavior of a braked wheel is measured and the brake pressure lowered in response to the slip and/or retardation of the wheel if a threshold value is surpassed, and later on raised again, and wherein the threshold value is increased with respect to a threshold base value ($S_G$) and subsequently decreased in response to time in order to avoid any undesired exceeding of the threshold value, caused especially by axle vibrations and the like, **characterized** in that the threshold value is increased by an amount ($S_H$ - $S_G$) with respect to the threshold base value ($S_G$) in response to the time ($t_1$, $t_2$) of the beginning of a lowering or raising of pressure in a control cycle, said amount ($S_H$ - $S_G$) either being a constant given quantity or being dependent on a previously measured vehicle deceleration or on the pressure reduction time interval ($t_2$ - $t_1$) in at least one control cycle, preferably the directly preceding one.

2. The method as claimed in claim 1, characterized in that the decreasing of the threshold value is effected at a gradient which depends on the time interval of ($t_2$ - $t_1$) of the lowering of pressure in at least one of the preceding control cycles.

3. The method as claimed in claim 1 or 2, characterized in that a gradient at which the decreasing of the threshold value is effected is made dependent on a vehicle deceleration determined.

4. The method as claimed in any one of the preceding claims, characterized in that the decreasing of the threshold value for a given time period ($t_x$ - $t_y$) is effected to values ($S_T$) which are less than the threshold base value ($S_G$).

5. The method as claimed in any one of the preceding claims, characterized in that the threshold value is increased to the increased value ($S_H$) during a control cycle in response to the time ($t_1$) of the beginning of a lowering of pressure, according to a given time function, up to a time which depends on the time ($t_2$) of the beginning of the subsequent pressure rise.

6. The method as claimed in any one of claims 1 to 4, characterized in that the threshold value is increased by the constant amount ($S_H$ - $S_G$) at the time ($t_2$) of the beginning of a raising of pressure.

7. The method as claimed in claim 4, characterized in that, following a decreasing of the threshold value to a value ($S_T$) which lies below the threshold base value ($S_G$), the pressure reducing phase is maintained for a given time period even if the slip and/or retardation measured exceeded the lower threshold value ($S_T$).

8. The method as claimed in claim 1, characterized in that the threshold value is increased with respect to the threshold base value ($S_G$) by an amount ($S_H$ - $S_G$) which depends on the pressure reduction time interval ($t_2$ - $t_1$) in the directly preceding control cycle.

**Revendications**

1. Procédé de régulation de la pression de freinage dans une installation de freinage de véhicule protégée contre le blocage, dans lequel le comportement en rotation d'une roue freinée est mesuré et, en fonction de son glissement et/ou de sa décélération, lorsqu'un seuil est dépassé, la pression de freinage est abaissée puis relevée plus tard, et dans lequel, pour éviter des dépassements de seuil indésirables résultant en particulier d'oscillations de l'essieu, ou phénomènes équivalents, le seuil est relevé puis abaissé en fonction du temps, comparativement à une valeur de base ($S_G$) du seuil,
caractérisé
en ce que, en fonction de l'instant ($t_1$, $t_2$) du début d'un abaissement ou d'une élévation de la pression dans un cycle de régulation, le seuil est relevé d'une certaine quantité ($S_H$ - $S_G$) comparativement à la valeur de base ($S_G$) du seuil, la quantité précitée ($S_H$ - $S_G$) étant, soit prédéterminée et d'une valeur constante, soit fonction d'une décélération du véhicule qui a été préalablement mesurée ou encore fonction d'un laps de temps de chute de la pression ($t_2$ - $t_1$), qui a eu lieu dans au moins un cycle de régulation précédent, de préférence dans le cycle immédiatement précédent.

2. Procédé selon la revendication 1,
caractérisé
en ce que l'abaissement de la valeur du seuil est exécuté avec un gradient qui dépend du laps de temps ($t_2$ - $t_1$) de chute de la pression qui a eu lieu dans au moins l'un des cycles de régulation précédents.

3. Procédé selon une des revendications 1 et 2,
caractérisé
en ce qu'un gradient, avec lequel l'abaissement du seuil s'effectue, est rendu dépendant d'une décélération mesurée du véhicule.

4. Procédé selon une des revendications précédentes,
caractérisé
en ce que l'abaissement du seuil s'effectue pendant un temps prédéterminé ($t_x$ - $t_y$), et atteint des valeurs ($S_T$) qui sont inférieures à la valeur de base ($S_G$) du seuil.

5. Procédé selon une des revendications précédentes,
caractérisé
en ce que, pendant un cycle de régulation, le seuil est relevé au niveau de la valeur relevée ($S_H$) en fonction de l'instant ($t_1$) du début d'une réduction de la pression, selon une fonction prédéterminée du temps, jusqu'à un instant qui dépend de l'instant ($t_2$) du début de l'élévation suivante de la pression.

6. Procédé selon une des revendications 1 à 4,
caractérisé
en ce que le seuil est relevé de la valeur constante ($S_H$ - $S_G$) à l'instant ($t_2$) du début d'une élévation de la pression.

7. Procédé selon la revendication 4,
caractérisé
en ce qu'après un abaissement du seuil à une valeur ($S_T$) située au-dessous de la valeur de base ($S_G$) du seuil, la phase de chute de la pression reste maintenue pendant un laps de temps donné, même si le glissement mesuré et/ou la décélération a ou ont dépassé la valeur inférieure ($S_T$) du seuil.

8. Procédé selon la revendication 1,
caractérisé
en ce que le seuil est relevé par rapport à la valeur de base ($S_G$) d'une quantité ($S_H$ - $S_G$) qui est fonction du laps de temps de chute de la pression ($t_1$ - $t_2$) qui a eu lieu dans le cycle de régulation immédiatemment précédent.

FIG.1 a

(b)

(c)

FIG.2 a

Radumfangsgeschwindigkeit

A

Bremsdruck

B₂

B₁

(b)

Schwellwert

(c)

$S_H$

$S_G$

$S_T$

$t_1$ $t_2$ $t_X$ $t_Y$ $t_{1'}$ $t_{2'}$ t

EP 0 329 071 B1

FIG.3a

12

# FIG.4

EP 0 329 071 B1

FIG.5

SH

TAKTGENERATOR

RÜCKWÄRTSZÄHLER    S

DRUCKABBAUTEIL

T

G1    G2

R ZÄHLER

VERGL.1

SG

G3

I

S1

S2

VERGL. 2

ÜBERWACHTERWERT

DRUCKABBAU